# EUROPEAN PATENT SPECIFICATION

(11) **EP 3 509 225 B1**
(45) Date of publication and mention of the grant of the patent: **25.11.2020**
(21) Application number: 19150323.4
(22) Date of filing: 04.01.2019
(51) Int. Cl.: H04B 1/48, H01Q 1/00, H01Q 1/22, H01Q 3/24, H01Q 21/28

(54) **EXTERNAL ANTENNA AND WIRELESS COMMUNICATION SYSTEM**
EXTERNE ANTENNE UND DRAHTLOSKOMMUNIKATIONSSYSTEM
ANTENNE EXTERNE ET SYSTÈME DE COMMUNICATION SANS FIL

(30) Priority: 09.01.2018 TW 10700817
(43) Date of publication of application: 10.07.2019
(73) Proprietor: Pegatron Corporation, Taipei City 112 (TW)
(72) Inventor: LO, Jain-Rung, TAIPEI CITY 112 (TW)
(74) Representative: Becker & Kurig Partnerschaft Patentanwälte PartmbB

(56) References cited:
- US-A1- 2003 134 601
- US-A1- 2006 223 456
- US-A1- 2008 181 146
- US-B1- 9 621 210

## Description

### BACKGROUND

### Technical Field

The invention relates to a wireless network communication technology, and in particular, to an external antenna and a wireless communication system capable of enhancing active reception capability.

### Description of Related Art

With the popularity of network communication, there are more and more places providing wireless access points (WAP) with wireless broadband (Wireless LAN: WLAN) to support wireless internet environment. In general, wireless base stations have signal instability at the edge of the signal range. In particular, since the transmission power of remote clients (such as mobile phones, notebook computers, etc.) is often smaller than that of wireless base stations, which may cause the wireless signal received from the remote client too weak to be recognized even when the transmitted signal is within the signal range of the wireless base station. Therefore, to increase the signal receiving capability of a wireless base station while applying existing material components and not violating communication regulations has become an important issue.

US 9 621 210 B1 discloses a communication device including a main circuit board, a cable, and an active antenna device. The cable is configured to deliver both a DC control signal and an RF signal. The active antenna device includes a comparator, a transmission path, a reception path, and an antenna element. The comparator recovers the DC control signal. The antenna element selects the transmission path or the reception path according to the recovered DC control signal, so as to transmit or receive the RF signal.

US 2003/134601 A1 discloses a communications device for transmitting RF signals from an external antenna. The device comprises a transceiver that sends signals over a cable to an external active antenna. The signals transmitted over the cable intermediate RF frequency signals. The active antenna receives the intermediate RF signals over the cable and up converts or down converts the respective RF transmit and receive signals.

US 2006/223456 A1 discloses a method and apparatus for partitioning a radio using a multi-chip module to group some or all of the components of the radio in a single package. A radio uses a multi-chip module, including a chip carrier. Various components of the radio reside in integrated circuits that are mounted to the chip carrier.

US 2008/181146 A1 discloses a WiFi antenna system including a WiFi amplifier having a reception antenna and a separate transmission antenna for respectively receiving from and transmitting to WiFi devices. A logic circuit controls transmission and reception of signals via the antennas. A splitter-combiner splits signals from a local area network and a signal level comparator determines whether the local area network signals are transmission signals which should be transmitted via the transmission antenna.

### SUMMARY

The invention provides an external antenna and a wireless communication system, and the external antenna is capable of enhancing active receiving capability so as to improve the receiving capability and communication quality of the wireless communication system under the condition of low cost and convenient use. The invention is defined by the appended independent claim. Preferred embodiments of the invention are stipulated in the dependent claims. While several embodiments and/or examples have been disclosed in this description, the subject matter for which protection is sought is strictly and solely limited to those embodiments and/or examples encompassed by the scope of the appended claims. Embodiments and/or examples mentioned in the description that do not fall under the scope of the claims are useful for understanding the invention.

An external antenna, according to an embodiment of the invention, is adapted to be connected with a communication host from outside. The external antenna includes a first antenna element, a second antenna element, a logic determination circuit, and a switching circuit. The communication host can operate in a reception mode and a transmission mode. The first antenna element is configured to receive a wireless signal when the communication host operates in the reception mode. The second antenna element is configured to transmit the wireless signal when the communication host operates in the transmission mode. The logic determination circuit determines whether the communication host is operating in the reception mode or the transmission mode, and generates a determination result. The switching circuit is coupled to the logic determination circuit to selectively couple to the first antenna element or the second antenna element according to the determination result. The antenna has two ends, the first antenna element is disposed at an end of the antenna, and the second antenna element is disposed at the other end of the antenna relatively closer to the communication host.

A wireless communication system according to an embodiment of the invention includes a communication host and an external antenna, and the external antenna is adapted to be connected with the communication host from outside. The external antenna includes a first antenna element, a second antenna element, a logic determination circuit and a switching circuit. The first antenna element is configured to receive a wireless signal when the communication host operates in a reception mode. The second antenna element is configured to transmit a wireless signal when the communication host operates in a transmission mode. The logic determination circuit determines whether the communication host is operating in the reception mode or the transmission mode, and generates a determination result. The switching circuit is coupled to the logic determination circuit to selectively couple to the first antenna element or the second antenna element according to the determination result. The antenna has two ends, the first antenna element is disposed at an end of the antenna, and the second antenna element is disposed at the other end of the antenna relatively closer to the communication host.

Based on the above, the external antenna of the embodiment of the invention is coupled to the communication host. The external antenna includes the first antenna element for receiving a wireless signal transmitted by the remote client, and the second antenna element for transmitting a wireless signal to the remote client, the logic determination circuit and the switching circuit. The logic determination circuit determines whether the communication host is operating in the transmission mode or the reception mode, and transmits the determination result to the switching circuit to switch between the first antenna element and the second antenna element. In another embodiment of the invention, a wireless communication system including the external antenna described above and the communication host is provided. Therefore, the external antenna and the wireless communication system of the embodiments of the invention have the capability of enhancing the received signal, and can improve the reception capability and communication quality of the wireless communication system under the conditions of applying existing material components, not violating communication regulations, and convenient use.

The above described features and advantages of the invention will be more apparent from the following description.

### BRIEF DESCRIPTION OF THE DRAWINGS

FIG. 1A is a side view of a wireless communication system according to an embodiment of the invention.
FIG. 1B is a schematic diagram of the wireless communication system according to the embodiment of FIG. 1A from another perspective.
FIG. 2A is a perspective view of a block diagram of an external antenna according to an embodiment of the invention.
FIG. 2B is a schematic diagram showing a circuit structure of an external antenna according to an embodiment of the invention.
FIG. 3 is a close-up view of an input/output interface of an external antenna according to an embodiment of the invention.
FIG. 4 is a schematic diagram of a logic determination circuit according to an embodiment of the invention.

### DETAILED DESCRIPTION

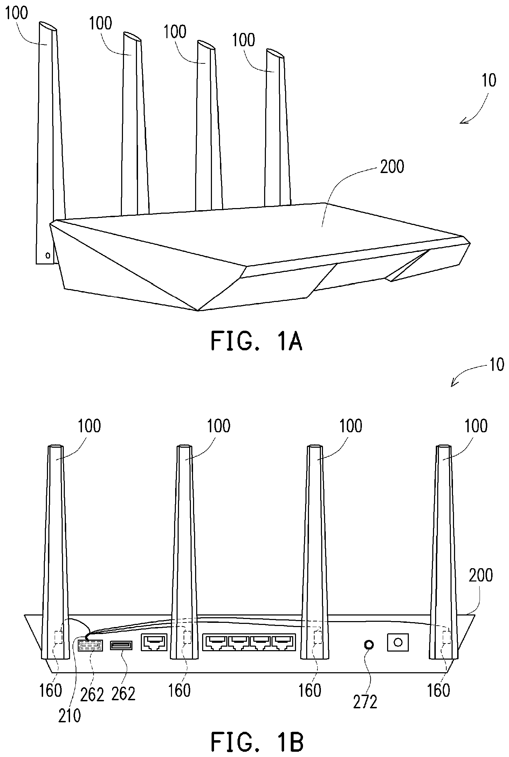

FIG. 1A is a side view of a wireless communication system according to an embodiment of the invention, and FIG. 1B is a schematic diagram of the wireless communication system according to the embodiment of FIG. 1A from another perspective. As shown in FIG. 1A and FIG. 1B, a wireless communication system 10 includes at least one external antenna 100 and a communication host 200, and the external antenna 100 is coupled to the communication host 200. In this embodiment, the external antenna 100 can be an external antenna for enhancing active reception. Four external antennas 100 are shown as an example in the figures, but the invention does not limit the number of antennas.

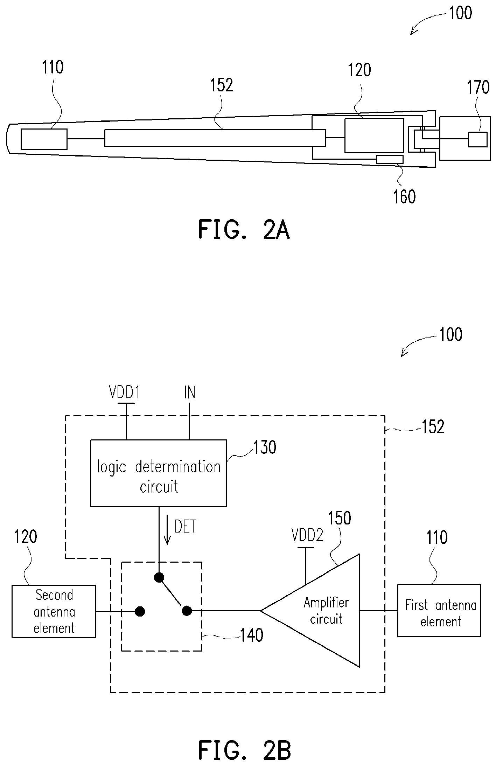

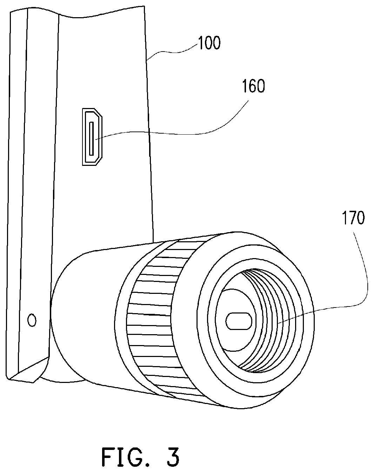

FIG. 2A is a perspective view of a block diagram of an external antenna according to an embodiment of the invention, FIG. 2B is a schematic diagram showing a circuit structure of an external antenna according to an embodiment of the invention, and FIG. 3 is a close-up view of an input/output interface of an external antenna according to an embodiment of the invention. Please refer to FIG. 2A to FIG. 3 in conjunction with FIGS. 1A and 1B.

In the present embodiment, the external antenna 100 includes a first antenna element 110, a second antenna element 120, and a communication circuit 152, wherein the first antenna element 110 and the second antenna element 120 are disposed at the opposite ends of the external antenna 100 in the extended direction (as shown in FIG. 2A). As shown in FIG. 2B, the communication circuit 152 includes a logic determination circuit 130, a switching circuit 140, and an amplifier circuit 150. The logic determination circuit 130 is coupled to the communication host 200, and the logic determination circuit 130 is configured to transmit a wireless signal from the communication host 200 and determine whether the communication host 200 is operating in a reception mode or a transmission mode so as to generate a determination result. The switching circuit 140 is coupled to the logic determination circuit 130 for switching between the first antenna element 110 and the second antenna element 120 to connect the logic determination circuit 130 according to the determination result. The amplifier circuit 150 is coupled between the first antenna element 110 and the switching circuit 140.

When the external antenna 100 receives a wireless signal from a remote client, this situation is referred to as the reception mode hereinafter, and when the external antenna 100 transmits a wireless signal which the communication host 200 desires to send to the remote client, this situation is referred to as the transmission mode hereinafter.

In the transmission mode, the logic determination circuit 130 turns on the second antenna element 120 through the switching circuit 140, and the first antenna element 110 is open. The communication host 200 transmits the wireless signal to the remote client through the second antenna element 120.

In the reception mode, the logic determination circuit 130 turns on the first antenna element 110 through the switching circuit 140, and the second antenna element 120 is open. The communication host 200 receives the wireless signal of the remote client through the first antenna element 110 and transmits it to the amplifier circuit 150. The amplifier circuit 150 amplifies the wireless signal received by the first antenna element 110 to improve the reception capability of the wireless communication system 10. In detail, the first antenna element 110 converts the received wireless signal, and then the amplifier circuit 150 amplifies the wireless signal to increase the received signal strength. Therefore, the communication host 200 receives the signal amplified by the amplifier circuit 150 to improve the reception capability of the wireless communication system 10. That is, the external antenna with the amplifier circuit 150 is capable of enhancing the reception capability.

Implementation of embodiments of the invention will be described in further detail below.

The communication host 200 is, for example, a wireless access point, a wireless router, a bridge, a gateway, a customer premises equipment (CPE), or other network transmission devices capable of wireless communication, and is not limited herein.

The external antenna 100 uses the first antenna element 110 or the second antenna element 120 to receive or transmit wireless signals. In an embodiment, the first antenna element 110 or the second antenna element 120 may be, for example, a dual-band antenna, and cover a first frequency band and a second frequency band, wherein the antenna structures of the first antenna element 110 and the second antenna element 120 may be the same or different. For example, in an embodiment, the first antenna element 110 or the second antenna element 120 (or both) may cover the 2.4 GHz band (i.e., the first frequency band) and the 5 GHz band (i.e., the second frequency band). In other words, in an embodiment, the external antenna 100 can support operating frequency bands under WiFi and Bluetooth communication technologies. That is, the external antenna 100 can be, for example, a WiFi antenna covering the 2.4 GHz band and the 5 GHz band.

In the embodiment of FIG. 2A, in order to avoid board noise or signal interference, the first antenna element 110 responsible for the reception mode is disposed at the upper end of the external antenna 100, and the second antenna element 120 responsible for the transmission mode is disposed at the bottom end of the external antenna 100. Specifically, the first antenna element 110 is disposed at one end of the external antenna 100 away from the communication host 200 while the second antenna element 120 is disposed at the other end of the external antenna 100 near the communication host 200.

In the present embodiment, the external antenna 100 further includes a first input/output interface 160. The first input/output interface 160 is a female connector for connecting with a bus of the communication host 200 to receive a DC/AC (direct current/alternating current) power supply. The DC/AC power supply can provide the driving voltage VDD2 for the amplifier circuit 150. Specifically, the first input/output interface 160 may adopt physical power transmission line, such as a power supply hole, a Type-C interface, or a Universal Serial Bus (USB) interface, or may be used to receive wireless power transmission. The charging interface is not limited by the invention. In the embodiment of FIG. 3, the first input/output interface 160 is exemplified by a Micro Universal Serial Bus (Micro USB) interface.

Referring to FIG. 1B in conjunction with FIG. 3, in the embodiment, the wireless communication system 10 further includes a transmission line 210 electrically connected to the communication host 200 and the external antenna 100. One end of the transmission line 210 is connected to one of the input/output (input and output) interfaces 262 of the communication host 200. The other end of the transmission line 210 is connected to the first input/output interface 160 for supplying DC/AC power from the communication host 200 to the external antenna 100. For example, the transmission line 210 is a USB or Micro USB transmission line (but is not limited thereto). That is, the transmission interface of the transmission line 210 for connecting the communication host 200 is the standard Universal Serial Bus interface, and the transmission interface for connecting to the external antenna 100 is the Micro USB interface. In this embodiment, the transmission line 210 is a transmission line of one USB connector to four Micro USB connectors, and therefore the plurality of external antennas 100 can be powered by only one input/output interface 262. However, the number of the transmission line 210 is not limited to one. In other embodiments, one input/output interface 262 can supply power to only one external antenna 100.

It is to be noted that the positions and implementation of the first input/output interface 160 and the input/output interface 262 in the drawings are merely illustrative and are not intended to limit the invention.

In the embodiment, the second input/output interface 170 of the external antenna 100 is coupled to the signal input/output interface 272 of the communication host 200 for performing signal transmission with the communication host 200. The logic determination circuit 130 transmits the wireless signal through the second input/output interface 170, and the first input/output interface 160 and the second input/output interface 170 are two separate interfaces. The second input/output interface 170 is, for example, an SMA (Sub Miniature version A) connector, a BNC (Bayonet Neill-Concelman) connector or an N-Type connector, or any other connector component for receiving a wireless signal, which is not limited by the invention.

According to the above embodiment, the external antenna 100 is electrically connected to the communication host 200 through the first input/output interface 160 and the second input/output interface 170. That is, the external antenna 100 and the communication host 200 are separable. Therefore, the external antenna 100 of the invention does not need to be bound to a specific communication host 200. In addition, the antenna of the commercially available communication host can also be replaced with the external antenna 100 of the invention, thereby enhancing the connection quality and connectivity of the communication host 200 as well as using existing material components, no violating communication regulations, and saving the cost.

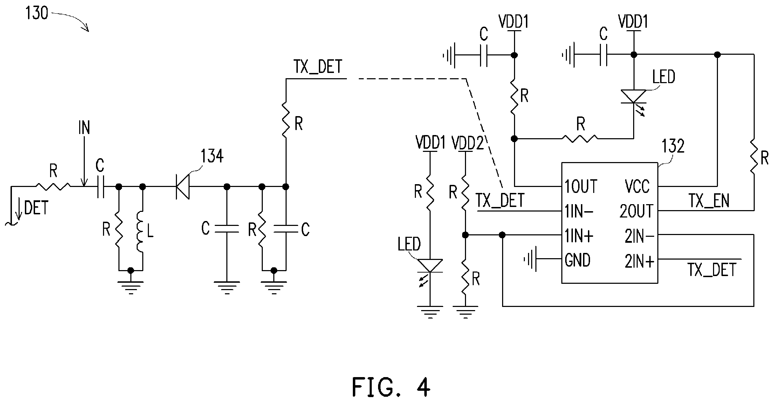

FIG. 4 is a schematic diagram of a logic determination circuit according to an embodiment of the invention. The logic determination circuit shown in Fig. 4 can be applied to the above embodiment. Referring to FIG. 4 in conjunction with FIG. 2B, the logic determination circuit 130 may transmit the wireless signal through the second input/output interface 170. That is, the wireless signal is input via the input terminal IN in FIG. 2B. The logic determination circuit 130 may receive the DC power (for example, 5V) through the first input/output interface 160, which is the terminal VDD1 in FIG. 2B. The logic determination circuit 130 could determine whether the wireless signal indicates the communication host 200 to operate in the reception mode or the transmission mode, and thus generate the determination result DET. Specifically, in the embodiment of FIG. 4, the logic determination circuit 130 includes a diode 134 and a comparator 132. The comparator 132 is coupled to the communication host 200, and the diode 134 is coupled between the comparator 132 and the switching circuit 140. The switching circuit 140 is, for example, a radio frequency switch. The comparator 132 receives the DC/AC power (i.e. the driving voltages VDD1 and VDD2) supplied from the communication host 200 through the first input/output interface 160. For example, the driving voltage VDD1 is 5V, and the driving voltage VDD2 is 3.3V (but are not limited thereto).

In the embodiment, the comparator 132 further receives the wireless signal under test TX_DET provided by the communication host 200 through the second input/output interface 170, and compares the enable signal TX_EN with the wireless signal under test TX DET to determine whether the received wireless signal under test TX DET indicates the reception mode or the transmission mode. The diode 134 receives the wireless signal under test TX DET and converts it into a voltage signal (i.e., the determination result DET). The logic determination circuit 130 provides a determination result DET to the switching circuit 140. The switching circuit 140 switches between the reception mode and the transmission mode according to the determination result DET. In details, in an embodiment, when the determination result DET is at low level (e.g., a logic low level), the switching circuit 140 switches to the first antenna element 110 and enters the reception mode, and when the determination result DET is at high level (e.g., a logic high level), the switching circuit 140 switches to the second antenna element 120 and enters the transmission mode.

In particular, the plurality of resistors R, the plurality of capacitors C or the inductors L and the circuit structure used in FIG. 4 are only used as an embodiment of the circuit, and are not intended to limit the invention. The resistance values of the plurality of resistors R are not necessarily the same, and the capacitance values of the plurality of capacitors C are not necessarily the same. Those skilled in the art can obtain sufficient instructions and recommendations from the circuit architecture of FIG. 4 and the ordinary knowledge of the technical field, and thus no further description will be provided below.

The following is an experimental result of an embodiment of the invention. Under the condition of the same communication host and the same remote client, the signal transmission and reception capabilities of the original antenna of the communication host and the external antenna 100 are tested at different distances. Here, the communication host is the router TP-Link Archer C2, and the remote client is the ASUS notebook X550V, and the number of antennas is two.

Tables 1 and 2 show the signal transmission and reception capabilities tested at frequency bands of 2.4G HZ and 5G HZ, respectively. The communication host and the remote client are 30 meters and 50 meters apart. TX is the network transmitting speed and RX is the network receiving speed.

**Table 1**

| Frequency 2.4G | Network Transmission Speed | 30 meters | 50 meters |
|---|---|---|---|
| Original Antenna | TX(Mbps) | 66.325 | 10.325 |
| | RX(Mbps) | 60.554 | 3.995 |
| External Antenna | TX(Mbps) | 65.398 | 9.866 |
| | RX(Mbps) | 63.114 | 8.687 |

**Table 2**

| Frequency 5G | Network Transmission Speed | 30 meters | 50 meters |
|---|---|---|---|
| Original Antenna | TX(Mbps) | 135.263 | 26.712 |
| | RX(Mbps) | 119.445 | 13.365 |
| External Antenna | TX(Mbps) | 133.922 | 25.677 |
| | RX(Mbps) | 128.352 | 21.964 |

From the experimental results, when the original antenna of the same communication host is replaced with the external antenna according to the embodiment of the invention, the capability of wireless signal reception and the quality of the connection have significantly improved, especially in a long distance.

In summary, the external antenna and the wireless communication system of the embodiment of the invention is provided. The external antenna is coupled to the communication host, and includes a first antenna element, a second antenna element, a logic determination circuit, an amplifier circuit, and a switching circuit. The logic determination circuit determines whether the communication host is to receive the wireless signal or to transmit the wireless signal, and sends the determination result to the switching circuit to switch to the first antenna element or the second antenna element. The first antenna element is configured to receive the wireless signal, and the second antenna element is configured to transmit the wireless signal, thus the wireless signal is received and transmitted by two respective sets of antenna elements. Moreover, the first antenna element and the second antenna element are disposed at the opposite ends of the external antenna in the extended direction, thereby reducing noise and improving communication quality. The wireless signal received by the first antenna element is then amplified by the amplifier circuit, so the signal reception capability can be improved under low power consumption conditions. In addition, since the external antenna can be easily detached or attached with the communication host, it can be paired with different communication hosts to enhance the application flexibility. Therefore, the external antenna and the wireless communication system of the embodiments of the invention can improve the signal reception capability and communication quality as well as have advantages of using existing material components, low cost and convenient use without violating communication regulations.

## Claims

1. An external antenna (100), adapted to be connected externally to a communication host (200) operating between a reception mode and a transmission mode, the external antenna (100) comprising:
a first antenna element (110), configured to receive a wireless signal when the communication host (200) operates in the reception mode;
a second antenna element (120), configured to transmit the wireless signal when the communication host (200) operates in the transmission mode;
a logic determination circuit (130), coupled to the communication host (200) and configured to determine whether the communication host (200) operates in the reception mode or the transmission mode and generate a determination result (DET); and
a switching circuit (140), coupled to the logic determination circuit (130) and configured to selectively couple to the first antenna element (110) or the second antenna element (120) according to the determination result (DET),
wherein the first antenna element (110) and the second antenna element (120) are disposed at opposite ends of the external antenna (100) in an extended direction, and wherein the first antenna element (110) is disposed at an end of the external antenna (100) away from the communication host (200), and the second antenna element (120) is disposed at the other end of the external antenna (100) near the communication host (200).

2. The external antenna (100) according to claim 1, further comprising: an amplifier circuit (150), coupled between the first antenna element (110) and the switching circuit (140) and configured to amplify the wireless signal received by the first antenna element (110).

3. The external antenna (100) according to claim 1, wherein the logic determination circuit (130) comprises a diode (134) and a comparator (132), and the comparator (132) is coupled to the communication host (200) and the diode (134) is coupled between the comparator (132) and the switching circuit (140).

4. The external antenna (100) according to claim 1, wherein the switching circuit (140) is coupled to the first antenna element (110) when the determination result (DET) is at low level, and the switching circuit (140) is coupled to the second antenna element (120) when the determination result (DET) is at high level.

5. The external antenna (100) according to claim 1, further comprising:
a first input/output interface (160), coupled to the communication host (200) and configured to receive direct current power from the communication host (200); and
a second input/output interface (170), coupled to the communication host (200), wherein the logic determination circuit (130) transmits the wireless signal through the second input/output interface (170).

6. The external antenna (100) of claim 1, wherein each of the first antenna element (110) and the second antenna element (120) covers a first frequency band and a second frequency band.

7. A wireless communication system, being **characterized by** comprising:
a communication host (200); and
the external antenna (100), according to claim 1, coupled to the communication host (200).

8. The wireless communication system according to claim 7, further comprising: a transmission line, electrically connecting the communication host (200) with the external antenna (100) and configured to supply power from the communication host (200) to the external antenna (100), wherein a transmission interface of the transmission line for connecting the communication host (200) is a standard Universal Serial Bus (USB) interface and a transmission interface of the transmission line for connecting the external antenna (100) is a Micro Universal Serial Bus (Micro USB) interface.

## Patentansprüche

1. Externe Antenne (100), die angepasst ist, um extern mit einem Kommunikationshost (200) verbunden zu werden, arbeitend zwischen einem Empfangsmodus und einem Übertragungsmodus, wobei die externe Antenne (100) umfasst:
ein erstes Antennenelement (110), das so konfiguriert ist, dass es ein drahtloses Signal empfängt, wenn der Kommunikationshost (200) in dem Empfangsmodus arbeitet;
ein zweites Antennenelement (120), das so konfiguriert ist, dass es das drahtlose Signal überträgt, wenn der Kommunikationshost (200) im Übertragungsmodus arbeitet;
eine logische Bestimmungsschaltung (130), die mit dem Kommunikationshost (200) gekoppelt und so konfiguriert ist, dass sie bestimmt, ob der Kommunikationshost (200) im Empfangsmodus oder im Übertragungsmodus arbeitet, und ein Bestimmungsergebnis (DET) erzeugt; und
eine Umschaltschaltung (140), die mit der logischen Bestimmungsschaltung (130) gekoppelt und so konfiguriert ist, dass sie selektiv mit dem ersten Antennenelement (110) oder dem zweiten Antennenelement (120) gemäß dem Bestimmungsergebnis (DET) koppelt,
wobei das erste Antennenelement (110) und das zweite Antennenelement (120) an gegenüberliegenden Enden der externe Antenne (100) in einer Erstreckungsrichtung angeordnet sind, und
wobei das erste Antennenelement (110) an einem Ende der externen Antenne (100) angeordnet ist, das entfernt von dem Kommunikationshost (200) liegt, und das zweite Antennenelement (110) an dem anderen Ende der externen Antenne (100) angeordnet ist, das nahe dem Kommunikationshost (200) liegt.

2. Externe Antenne (100) gemäß Anspruch 1, weiter umfassend:
eine Verstärkerschaltung (150), die zwischen dem ersten Antennenelement (110) und der Umschaltschaltung (140) gekoppelt und so konfiguriert ist, dass sie das von dem ersten Antennenelement (110) empfangene drahtlose Signal verstärkt.

3. Externe Antenne (100) gemäß Anspruch 1, wobei die logische Bestimmungsschaltung (130) eine Diode (134) und einen Komparator (132) umfasst, und der Komparator (132) mit dem Kommunikationshost (200) gekoppelt ist, und die Diode (134) zwischen dem Komparator (132) und der Umschaltschaltung (140) gekoppelt ist.

4. Externe Antenne (100) gemäß Anspruch 1, wobei die Umschaltschaltung (140) mit dem ersten Antennenelement (110) gekoppelt ist, wenn das Bestimmungsergebnis (DET) auf niedrigem Pegel ist, und die Umschaltschaltung (140) mit dem zweiten Antennenelement (120) gekoppelt ist, wenn das Bestimmungsergebnis (DET) auf hohem Pegel ist.

5. Externe Antenne (100) gemäß Anspruch 1, weiter umfassend:
eine erste Eingangs-/Ausgangsschnittstelle (160), die mit dem Kommunikationshost (200) gekoppelt und so konfiguriert ist, dass sie Gleichstromenergie von dem Kommunikationshost (200) empfängt; und
eine zweite Eingabe-/Ausgabeschnittstelle (170), die mit dem Kommunikationshost (200) gekoppelt ist, wobei die logische Bestimmungsschaltung (130) das drahtlose Signal über die zweite Eingabe-/Ausgabeschnittstelle (170) überträgt.

6. Externe Antenne (100) gemäß Anspruch 1, wobei sowohl das erste Antennenelement (110) als auch das zweite Antennenelement (120) ein erstes Frequenzband und ein zweites Frequenzband abdeckt.

7. Drahtloses Kommunikationssystem, **dadurch gekennzeichnet, dass** es umfasst:
einen Kommunikationshost (200); und
die externe Antenne (100) gemäß Anspruch 1, die mit dem Kommunikationshost (200) gekoppelt ist.

8. Drahtlose Kommunikationssystem gemäß Anspruch 7, weiter umfassend:
eine Übertragungsleitung, die den Kommunikationshost (200) mit der externen Antenne (100) elektrisch verbindet und so konfiguriert ist, dass sie Energie von dem Kommunikationshost (200) an die externe Antenne (100) liefert, wobei eine Übertragungsschnittstelle der Übertragungsleitung zum Verbinden des Kommunikationshosts (200) eine Standard-Universal-Seriell-Bus-(USB)-Schnittstelle ist und eine Übertragungsschnittstelle der Übertragungsleitung zum Verbinden der externen Antenne (100) eine Mikro-Universal-Seriell-Bus-(Mikro-USB)-Schnittstelle ist.

## Revendications

1. Antenne externe (100), apte à être reliée extérieurement à un hôte de communication (200) fonctionnant entre un mode de réception et un mode de transmission, l'antenne externe (100) comprenant :
un premier élément d'antenne (110), configuré pour recevoir un signal sans fil lorsque l'hôte de communication (200) fonctionne dans le mode de réception ;
un deuxième élément d'antenne (120), configuré pour transmettre le signal sans fil lorsque l'hôte de communication (200) fonctionne dans le mode de transmission :
un circuit de détermination de logique (130), couplé à l'hôte de communication (200) et configuré pour déterminer si l'hôte de communication (200) fonctionne dans le mode de réception ou dans le mode de transmission et générer un résultat de détermination (DET) ; et
un circuit de commutation (140), couplé au circuit de détermination de logique (130) et configuré pour se coupler sélectivement au premier élément d'antenne (110) ou au deuxième élément d'antenne (120) en fonction du résultat de détermination (DET),
dans laquelle le premier élément d'antenne (110) et le deuxième élément d'antenne (120) sont disposés à des extrémités opposées de l'antenne externe (100) dans une direction étendue, et
dans laquelle le premier élément d'antenne (110) est disposé à une extrémité de l'antenne externe (100) à l'écart de l'hôte de communication (200), et le deuxième élément d'antenne (120) est disposé à l'autre extrémité de l'antenne externe (100) près de l'hôte de communication (200).

2. Antenne externe (100) selon la revendication 1, comprenant en outre :
un circuit amplificateur (150), couplé entre le premier élément d'antenne (110) et le circuit de commutation (140) et configuré pour amplifier le signal sans fil reçu par le premier élément d'antenne (110).

3. Antenne externe (100) selon la revendication 1, dans laquelle le circuit de détermination de logique (130) comprend une diode (134) et un comparateur (132), et le comparateur (132) est couplé à l'hôte de communication (200) et la diode (134) est couplée entre le comparateur (132) et le circuit de commutation (140).

4. Antenne externe (100) selon la revendication 1, dans laquelle le circuit de commutation (140) est couplé au premier élément d'antenne (110) lorsque le résultat de détermination (DET) est à un bas niveau, et le circuit de commutation (140) est couplé au deuxième élément d'antenne (120) lorsque le résultat de détermination (DET) est à un haut niveau.

5. Antenne externe (100) selon la revendication 1, comprenant en outre :
une première interface d'entrée/sortie (160), couplée à l'hôte de communication (200) et configurée pour recevoir une énergie de courant continu depuis l'hôte de communication (200) ; et
une deuxième interface d'entrée/sortie (170), couplée à l'hôte de communication (200), dans laquelle le circuit de détermination de logique (130) transmet le signal sans fil à travers la deuxième interface d'entrée/sortie (170).

6. Antenne externe (100) selon la revendication 1, dans laquelle chacun du premier élément d'antenne (110) et du deuxième élément d'antenne (120) couvre une première bande de fréquences et une deuxième bande de fréquences.

7. Système de communication sans fil, étant **caractérisé en ce qu'**il comprend :
un hôte de communication (200) ; et
l'antenne externe (100) selon la revendication 1, couplée à l'hôte de communication (200).

8. Système de communication sans fil selon la revendication 7, comprenant en outre :
une ligne de transmission, reliant électriquement l'hôte de communication (200) à l'antenne externe (100) et configurée pour fournir de l'énergie de l'hôte de communication (200) à l'antenne externe (100), dans lequel une interface de transmission de la ligne de transmission pour relier l'hôte de communication (200) est une interface bus série universel (USB) standard et une interface de transmission de la ligne de transmission pour relier l'antenne externe (100) est une interface microbus série universel (Micro USB).
